# EUROPÄISCHE PATENTSCHRIFT

(11) **EP 0 787 159 B1**
(45) Veröffentlichungstag und Bekanntmachung des Hinweises auf die Patenterteilung: **23.12.1998**
(21) Anmeldenummer: 95937799.5
(22) Anmeldetag: 18.10.1995
(51) Int. Cl.: C08F 285/00, C09D 151/00

(54) **POLYURETHANMODIFIZIERTES POLYACRYLAT**
POLYURETHANE-MODIFIED POLYACRYLATE
POLYACRYLATE MODIFIE A L'AIDE DE POLYURETHANE

(30) Priorität: 20.10.1994 DE 4437535
(43) Veröffentlichungstag der Anmeldung: 06.08.1997
(73) Patentinhaber: BASF Coatings Aktiengesellschaft, 48165 Münster (DE)
(72) Erfinder: SCHWARTE, Stephan, D-48282 Emsdetten (DE); WEGNER, Egon, D-48143 Münster (DE); REUSMANN, Gerhard, D-48147 Münster (DE); PETRI, Cornelia, D-97084 Würzburg (DE)
(74) Vertreter: Fitzner, Uwe, Dr.
(86) Internationale Anmeldenummer: EP9504091
(87) Internationale Veröffentlichungsnummer: WO9612747

(56) Entgegenhaltungen:
- EP-A- 0 297 576

## Beschreibung

Die vorliegende Erfindung betrifft ein polyurethanmodifiziertes Polyacrylat, das sich zur Herstellung von wäßrigen, pigmentierten Lacken eignet.

Derartige Lacke eignen sich für die aus dem Stand der Technik bekannten Base-Clear-Coat-Verfahren, die vor allem in der Automobilindustrie zur Herstellung hochwertiger Decklackierungen, insbesondere Metalleffektlackierungen eingesetzt werden (vgl. EP-A-38127, EP-A-89497 und DE-OS-3628124). Bei diesen Verfahren werden im überwiegenden Maße Basislacke eingesetzt, die als Verdünnungs- und/oder Lösemittel ausschließlich organische Lösemittel enthalten.

Seit einigen Jahren werden daher in der Lackindustrie wäßrige Basislacke entwickelt, die sich für Base-Coat/Clear-Coat-Verfahren eignen. Ein wesentliches Merkmal dieser Base-Code/Clear-Code-Verfahren besteht darin, daß der transparente Decklack auf die noch nicht eingebrannte Basisschicht lackiert wird und erst danach Basisschicht und Decklack gemeinsam eingebrannt werden (Naß-in-Naß-Verfahren).

Für diese Verfahrenweise geeignete Lacke sind u.a. in der DE-OS-4009858 beschrieben. Dort werden spezielle wasserverdünnbare Polyacrylatharze für die Lacke eingesetzt.

Für Naß-in-Naß-Verfahren geeignete Basislacke werden darüber hinaus in der Deutschen Offenlegungsschrift 4010176 beschrieben. Diese enthalten als Bindemittel ein Polymer, das erhältlich ist, indem in einem organischen Lösemittel oder einem Gemisch organischer Lösemittel ethylenisch ungesättigte Monomere und Polyurethanharze umgesetzt werden. Wesentlich bei diesem Verfahren ist der Einsatz von polymerisierbaren Doppelbindungen bei der Herstellung des Polyurethanharzes.

Die bisherige Praxis hat ergeben, daß die nach dem Naß-in-Naß-Verfahren aufgebrachten Lacke noch keine ausreichende Stabilität bei der Lagerung aufweisen. Dies gilt insbesondere, wenn unter praxisrelevanten erhöhten Temperaturen gelagert wird.

Die vorliegende Erfindung hat sich demgemäß die Aufgabe gestellt, ein polyurethanmodifiziertes Polyacrylat zur Verfügung zu stellen, das sich für die Herstellung von wäßrigen Basislacken eignet und bei diesen eine erhöhte Lagerstabilität bewirkt.

Diese Aufgabe wird dadurch gelöst, daß das polyurethanmodifizierte Polyacrylat erhältlich ist
I. durch Polymensation unter Zugabe
   a1) eines im wesentlichen carboxylgruppenfreien Acrylsäureesters oder eines Gemisches von Acrylsäureestern,
   a2) eines ethylenisch ungesättigten Monomeren, das mindestens eine Hydroxylgruppe pro Molekül trägt und im wesentlichen carboxylgruppenfrei ist oder eines Gemisches aus solchen Monomeren und
   a3) eines im wesentlichen carboxylgruppenfreien von (a1) und (a2) verschiedenen ethylenisch ungesättigten Monomeren oder eines Gemisches aus solchen Monomeren
   zu einer Polyurethanlösung, die keine copolymerisierbaren Doppelbindungen enthält und aus folgenden Komponenten herstellbar ist:
   a) einem Polyester- und/oder Polyetherpolyol mit einem zahlenmittleren Molekulargewicht von 400 bis 5000 oder ein Gemisch aus solchen Polyester- und/oder Polyetherpolyolen und
   b) einem Polyisocyanat oder ein Gemisch aus Polyisocyanaten,
   wobei die Komponente (b) hinsichtlich der Funktionalität der Polyisocyanate so zusammengesetzt ist, daß kein vernetztes Polyurethanharz erhalten wird, und wobei das Polyurethanharz ein zahlenmittleres Molekulargewicht von 700 bis 30.000 aufweist,
II. durch anschließende Weiterpolymerisation und Zugabe
   b1) mindestens eines eine Carboxylgruppe pro Molekül tragenden ethylenisch ungesättigten Monomeren oder eines Gemisches aus solchen Monomeren und
   b2) eines im wesentlichen carboxylgruppenfreien ethylenisch ungesättigten Monomeren oder eines Gemisches aus solchen Monomeren, nachdem mindestens 80 Gew.-% der in Stufe (I) zugegebenen Monomere umgesetzt worden sind, und
III. durch Neutralisation nach Beendigung der Polymerisation und Dispergierung in Wasser,
wobei die Komponenten (a1), (a2), (a3), (b1) und (b2) in Art und Menge so ausgewählt werden, daß das aus (a1), (a2), (a3), (b1) und (b2) erhaltene Polyacrylatharz eine Hydroxylzahl von 0 - 200, eine Säurezahl von 20 - 100 und eine Glasübergangstemperatur von - 40 bis + 60°C aufweist.

Die Gewichtsanteile von (a1) liegen bei 40 - 90, vorzugsweise 40 - 80 Gew.-%, von (a2) bei 0 -45, vorzugsweise 4 - 34 Gew.-%, von (a3) bei 0 - 40, vorzugsweise 10 - 30 Gew.-%, von (b1) bei 2,5 - 15, vorzugsweise 3 - 7 Gew.-% und von (b2) bei 0 - 60, vorzugsweise 0-28 Gew.-%.

Erfindungsgemäß wird das Polyurethan, das keine copolymerisierbaren Doppelbindungen enthält, in einem organischen Lösemittel oder einem Lösemittelgemisch gelöst. Die Polymensation gem. Stufe II wird erst dann durchgeführt, wenn mindestens 80 % der in Stufe I zugegebenen Monomeren umgesetzt worden sind.

Die erfindungsgemäß eingesetzten wasserverdünnbaren Polyacrylatharze ermöglichen die Formulierung von Basislacken, die - insbesondere im Vergleich zu bekannten polyacrylatharzhaltigen Basislacken - eine verbesserte Lagerstabilität aufweisen.

Zur Herstellung der erfindungsgemäß einzusetzenden Polyacrylatharze kann als Komponente (a1) jeder mit (a2), (a3), (b1) und (b2) copolymerisierbare, im wesentliche carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat und cycloaliphatische (Meth)acrylsäurester, wie z.B. Cyclohexyl(meth)acrylat genannt. Bevorzugt werden Gemische aus Alkylacrylaten und/oder Alkylmethacrylaten als (a1)-Komponente eingesetzt, die zu mindestens 25 Gew.-% aus n-Butyl- und/oder t-Butylacrylat und/oder n-Butyl- und/oder t-Butylmethylacrylat bestehen.

Als Komponente (a2) können alle mit (a1), (a3), (b1) und (b2) copolymerisierbaren ethylenisch ungesättigten Monomere, die mindestens eine Hydroxylgruppe pro Molekül tragen und im wesentlichen carboxylgruppenfrei sind, oder ein Gemisch aus solchen Monomeren eingesetzt werden. Als Beispiele werden Hydroxyalkylester der Acrylsäure, Methacrylsäure oder einer anderen a,β-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure und Methacrylsäure, in denen die Hydroxyalkylgruppe bis zu 4 Kohlenstoffatomen enthält, Umsetzungsprodukte aus cyclischen Estern, wie z.B. ε-Caprolacton und diesen Hydroxylalkylestern oder Mischungen aus diesen Hydroxylalkylestern bzw. ε-Caprolactonmodifizierten Hydroxyalkylestem eingesetzt. Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat und 4-Hydroxybutylmethacrylat genannt. Entsprechende Ester von anderen ungesättigten Säuren wie z.B. Ethacrylsäure, Crotonsäure und ähnliche Säuren mit bis zu etwa 6 Kohlenstoffatomen pro Molekül können auch eingesetzt werden.

Als Komponente (a3) können alle mit (a1), (a2), (b1) und (b2) copolymerisierbaren, im wesentlichen carboxylgruppenfreien, von (a1) und (a2) verschiedenen ethylenisch ungesättigten Monomere oder Gemische aus solchen Monomeren eingesetzt werden. Als Komponente (a3) werden vorzugsweise vinylaromatische Kohlenwasserstoffe, wie Styrol, α-Alkylstyrol und Vinyltoluol, eingesetzt.

Die erfindungsgemäß verwendeten Polyacrylatharze werden hergestellt, indem in Stufe (I) die Komponente (a1) gegebenenfalls zusammen mit (a2) und ggf. zusammen mit (a3) und in Gegenwart eines Polyurethans, das keine copolymerisierbaren Doppelbindungen enthält, in einem organischen Lösemittel oder Lösemittelgemisch polymerisiert wird. Das Polyurethanharz wird aus folgenden Komponenten hergestellt:
a) ein Polyester- und/oder Polyetherpolyol mit einem zahlenmittleren Molekulargewicht von 400 bis 5000 oder ein Gemisch aus solchen Polyester- und/oder Polyetherpolyolen
b) ein Polyisocyanat oder ein Gemisch aus Polyisocyanaten
c) gegebenenfalls eine Verbindung, die mindestens eine gegenüber Isocyanatgruppen reaktive und mindestens eine zur Anionenbildung befähigte Gruppe im Molekül aufweist oder ein Gemisch aus solchen Verbindungen
d) gegebenenfalls eine Verbindung, die mindestens eine gegenüber NCO-Gruppen reaktive Gruppe und mindestens eine Poly(oxyalkylen)gruppe im Molekül aufweist, oder ein Gemisch aus solchen Verbindungen und gegebenenfalls
e) eine Hydroxyl- und/oder Aminogruppen enthaltende organische Verbindung mit einem Molekulargewicht von 60 bis 600, oder ein Gemisch aus solchen Verbindungen.

Das Polyurethanharz soll ein zahlenmittleres Molekulargewicht von 700 bis 30.000, vorzugsweise 500 bis 15000 haben. Es ist bevorzugt, daß das Polyurethanharz eine Säurezahl von 0 bis 2,0 aufweist. Das Molekulargewicht der Polyurethanharze kann-wie dem Fachmann bekannt- insbesondere durch das Mengenverhältnis und die Funktionalität der eingesetzten Ausgangsverbindungen (a) bis (e) gesteuert werden.

Die Polyurethanharze können sowohl in Substanz als auch in organischen Lösemitteln hergestellt werden. Die Polyurethanharze können durch gleichzeitige Umsetzung aller Ausgangsverbindungen hergestellt werden. In vielen Fällen ist es jedoch zweckmäßig, die Polyurethanharze stufenweise herzustellen. So ist es zum Beispiel möglich, ein isocyanatgruppenhaltiges Präpolymer herzustellen, das dann weiter umgesetzt wird. Weiter ist es möglich, aus den Komponenten (a), (b) und gegebenenfalls (c) und (d) ein isocyanatgruppenhaltiges Präpolymer herzustellen, das dann mit der Komponente (e) zu höhermolekularen Polyurethanen umgesetzt werden kann. In den Fällen, in denen als Komponente (c) eine Verbindung eingesetzt wird, die nur eine gegenüber Isocyanatgruppen reaktive Gruppe enthält, kann in einer ersten Stufe aus (b) und (c) ein isocyanatgruppenhaltiges Vorprodukt hergestellt werden, das anschließend mit den weiteren Komponenten weiter umgesetzt werden kann.

Die Umsetzung der Komponenten (a) bis (e) wird zweckmäßigerweise in Gegenwart von Katalysatoren, wie z.B. Dibutylzinndilaurat, Dibutylzinnmaleat, tertiäre Amine usw. durchgeführt.

Die einzusetzenden Mengen an Komponente (a), (b), (c), (d) und (e) ergeben sich aus dem anzustrebenden zahlenmittleren Molekulargewicht und der anzustrebenden Säurezahl.

Als Komponente (a) können gesättigte und ungesättigte Polyester- und/oder Polyetherpolyole, die keine polymerisierbaren Doppelbindungen enthalten, insbesondere Polyester- und/oder Polyetherdiole, mit einem zahlenmittleren Molekulargewicht von 400 bis 5000 eingesetzt werden. Geeignete Polyetherdiole sind z.B. Polyetherdiole der allgemeinen Formel H (-O-(CHR¹)ₙ-)ₘOH, wobei R¹ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich Mₙ von 400 bis 3000.

Polyesterdiole werden durch Veresterung von organischen Dicarbonsäuren oder ihren Anhydride mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit einer höheren Wertigkeit als 2 eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phtalsäure, Isophthalsäure, Terephtalsäure, Tetrahydrophtalsäure, Cyclohexandicarbonsäure, Bernsteinsäure, Adipinsäure, Azelainsäure, Sebazinsäure, Maleinsäure,, Fumarsäure, Glutarsäure, Hexachlorheptandicarbonsäure, Tetrachlorphtalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen beispielsweise Trimellithsäureanhydrid oder das Addukt von Maleinsäureanhydrid an ungesättigte Fettsäuren anwesend sein.

Es können auch Polyesterdiole eingesetzt werden, die durch Umsetzung eines Lactons mit einem Diol erhalten werden. Sie zeichnen sich durch die Gegenwart von entständigen Hydroxylgruppen und wiederkehrenden Polyesteranteilen der Formel (-CO-(CHR²)ₙ- CH₂-O) aus. Hierbei ist n bevorzugt 4 bis 6 und der Substitutent R² = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ε-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ε-Caprolactam mit niedermolekularen Diolen hergestellt werden.

Als Komponente (b) können aliphatische und/oder cycloalipathische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung. Beispiele für cycloaliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind, z.B. Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Als weiteres Beispiel für ein aliphatisches Diisocyanat wird Tetramethylxyloldiisocyanat genannt. Besonders bevorzugt werden als Diisocyanate Isophorondiisocyanat, Dicyclohexylmethandiisocyanat und Tetramethyxyloldiisocyanat genannt.

Die Komponente (b) muß hinsichtlich der Funktionalität der Polyisocyanate so zusammengesetzt sein, daß kein vernetztes Polyurethanharz erhalten wird. Die Komponente (b) kann neben Diisocyanaten auch einen Anteil an Polyisocyanaten mit Funktionalitäten über zwei - wie z.B. Triisocyanate - enthalten.

Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Als Veresterungskomponente können erfindungsgemäß polymere Fettsäuren eingesetzt werden. Diese können hergestellt werden, indem Fettsäuren, wie beispielsweise Linolen-, Linol- oder Ölsäure einzeln, im Gemisch oder im Gemisch mit gesättigten Fettsäuren polymerisiert werden. Es entsteht ein Gemisch, das je nach Reaktionsführung hauptsächlich dimere, aber auch monomere und trimere Moleküle sowie Nebenprodukte enthält. Üblicherweise wird destillativ gereinigt. Handelsübliche polymere Fettsäuren enthalten i.a. mindestens 80 Gew.-% dimere Fettsäure, bis zu 20 Gew.-% trimere Fettsäuren und maximal 1 Gew.-% monomere Fettsäuren. Es ist bevorzugt, polymere Fettsäuren einzusetzen, die zu mindestens 98 Gew.-% aus dimeren Fettsäuren und höchstens 2 Gew.-% trimeren Fettsäuren und höchstens Spuren monomerer Fettsäuren besteht.

Polymere Fettsäuren enthalten sowohl cyclische als auch lineare aliphatische Molekülfragmente. Im Sinne der vorliegenden Erfindungen werden sie jedoch nicht als cycloaliphatische, sondern als lineare aliphatische Polycarbonsäuren angesehen.

Die Einführung von zur Anionenbildung befähigten Gruppen in die Polyurethanmoleküle erfolgt über den Einbau von Verbindungen (c) in die Polyurethanmoleküle, die mindestens eine gegenüber Isocyanatgruppen reaktive und eine zur Anionenbildung befähigte Gruppe im Molekül enthalten. Die Menge an einzusetzender Komponente (c) kann aus der angestrebten Säurezahl berechnet werden.

Als Komponente (c) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (d) können beispielsweise Alkansäuren mit zwei Substituenten am α-ständigem Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (d) sind Dihydroxypropionsäure, Di-hydroxybernsteinsäure und Dihydroxybenzoesäure. Eine besonders bevorzugte Gruppe von Alkansäuren sind die α,α-Dimethylolalkansäuren der allgemeinen Formel R⁴-C(CH₂OH)₂COOH, wobei R⁴ für ein Wasserstoffatom oder eine Alkylgruppe mit bis zu etwa 20 Kohlenstoffatomen steht. Beispiele für solche Verbindungen sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise α,δ-Diaminovaleriansäure, 3,4-Diaminobenzoesäure, 2,4-Diaminotoluolsulfonsäure und 2,4-Diamino-diphenylethersulfonsäure.

Mit Hilfe der Komponente (d) können Poly(oxyalkylen)-gruppen als nichtionische stabilisierende Gruppen in die Polyurethanmoleküle eingeführt werden. Als Komponente (d) können beispielsweise eingesetzt werden Alkoxypoly(oxyalkylen)alkohole mit der allgemeinen Formel R'O-(-CH₂-CH"-O-)ₙ H in der R' für einen Alkylrest mit 1 bis 6 Kohlenstoffatomen, R" für ein Wasserstoffatom oder einen Alkylrest mit 1 bis 6 Kohlenstoffatomen und n für eine Zahl zwichen 20 und 75 steht.

Der Einsatz der Komponente (e) führt zur Molekulargewichtserhöhung der Polyurethanharze. Als Komponente (e) können beispielsweise Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gewichtsprozent, vorzugsweise 2 bis 20 Gewichtsprozent, bezogen auf die eingesetzte Menge an Komponente (a) und (e) eingesetzt.

Als Komponente (e) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substiuenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylenothanolamin. Bevorzugte Diamine sind Hydrazin, Alkyl- oder Cycloalkyldiamine wie Propylendiamin und 1-Amino-3-aminomethyl-3,5,5-trimethylcyclohexan.

Es können auch Polyamine als Komponente (e) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin ist Ethylhexylamin zu nennen.

Als organische Lösemittel und Polymerisationsinitiatoren können die für die Herstellung von Polyacrylatharzen üblichen und für die Herstellung von wäßrigen Dispersionen geeigneten Lösemittel und Polymerisationsinitiatoren eingesetzt werden. Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldieehthylether, Diethylenglykolmonobutylether, 3-Methyl-3-methoxybutanol und Propylenglykol genannt. Als Beispiele für brauchbare Polymerisationsinitiatoren werden freie Radikale bildende Initiatoren, wie z.B. Benzoylperoxid, Azobisisobutyronitril, t-Butylperethylhexanoat und t-Butylperbenzoat genannt. Die Polymerisation wird zweckmäßigerweise bei einer Temperatur von 80 bis 160° vorzugsweise 110 bis 160°C durchgeführt. Nachdem mindestens 80Gew.-%, vorzugsweise mindestens 90 Gew.-% der in Stufe (I) zugegebenen Monomere umgesetzt worden sind, werden in Stufe (II)
(b1) 2,5 bis 15, vorzugsweise 3 bis 7 Gew.-% eines mindestens eine Carboxylgruppe pro Molekül tragenden ethylenisch ungesättigten Monomeren oder eines Gemisches aus solchen Monomeren und
(b2) 0 bis 60, vorzugsweise 0 bis 28 Gew.-% eines im wesentlichen carboxylgruppenfreien ethylenisch ungesättigten Monomeren oder eines Gemisches aus solchen Monomeren
zugegeben und in Gegenwart des in Stufe (I) erhaltenen Reaktionsproduktes polymerisiert. In der Stufe II wird so lange polymerisiert, bis die in den Stufen (I) und (II) zugegebenen Monomeren im wesentlichen vollständig umgesetzt worden sind.

Als Komponente (b1) kann jedes mindestens eine Carboxylgruppe pro Molekül tragende, mit (a1), (a2), (a3) und (b2) copolymerisierbare ethylenisch ungesättigte Monomer oder ein Gemisch aus solchen Monomeren eingesetzt werden. Als Komponente (b1) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Etharylsäure, Crotonsäure, Maleinsäure, Fumarsäure und Itaconsäure genannt. Als Komponente (b1) können auch Maleinsäuremono(meth)acryloyloxyethylester, Bernsteinsäuremono(meth)acryloyloxyethylester und Phtalsäuremono(meth)acryloyloxyethylester eingesetzt werden.

Als Komponente (b2) kann jedes mit (a1), (a2), (a3) und (b1) copolymerisierbare ethylenisch ungesättigte Monomer oder ein Gemisch aus solchen Monomeren eingesetzt werden. Als Komponente (b2) können alle bei der Beschreibung der Komponenten (a1), (a2) und (a3) aufgezählten Monomere eingesetzt werden.

Die Komponenten (a1), (a2), (a3), (b1) und (b2) werden in Art und Menge so ausgewählt, daß das Polyacrylatharz eine Hydroxylzahl von 0 bis 200, vorzugsweise 60 bis 140, eine Säurezahl von 20 bis 100, vorzugsweise 25 bis 50 und eine Glasübergangstemperatur (T_{G}) von -40°C bis +60°C, vorzugsweise -20°C bis +40°C, aufweist.

Die Menge und Zugabegeschwindigkeit des Initiators wird vorzugsweise so gewählt, daß ein Polyacrylatharz mit einem zahlenmittleren Molekulargewicht von 2500 bis 20000 erhalten wird. Es ist bevorzugt, die Initiatorzugabe zum gleichen Zeitpunkt wie die Zugabe der Monomeren zu beginnen und etwa eine halbe Stunde, nachdem die Zugabe der Monomeren beendet worden ist, zu beenden. Der Initiator wird vorzugsweise in konstanter Menge pro Zeiteinheit zugegeben. Nach Beendigung der Initiatorzugabe wird das Reaktionsgemisch noch so lange (in der Regel etwa 1 ½ Stunden) auf Polymerisationstemperatur gehalten, bis alle eingesetzten Monomere im wesentlichen vollständig umgesetzt worden sind. "Im wesentlichen vollständig" umgesetzt soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Nach Beendigung der Polymerisation wird das erhaltene Polyacrylatharz zumindest teilweise neutralisiert und in Wasser dispergiert.

Zur Neutralisation können sowohl organische Basen als auch anorganische Basen verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden teritäre Amine als Neutralisationsmittel eingesetzt, insbesondere Dimethylethanolamin, Triethylamin, Tripropylamin und Tributylamin.

Die Neutralisationsreaktion wird im allgemeinen durch Mischen der neutralisierenden Base mit dem Polyacrylatharz durchgeführt. Dabei wird vorzugsweise soviel Base eingesetzt, daß das Polyacrylatharz einen pH-Wert von 7 - 8,5, vorzugsweise 7,2 bis 7,8 aufweist.

Anschließend wird das partiell oder vollständig neutralisierte Polyacrylatharz durch Zugabe von Wasser dispergiert. Dabei entsteht eine wäßrige Polyacrylatharzdispersion. Gegebenenfalls kann ein Teil oder das gesamte organische Lösemittel abdestilliert werden.

Die erfindungsgemäßen Polyacrylatharzdispersionen enthalten Polyacrylatharzteilchen, deren mittleren Teilchengröße vorzugsweise zwischen 60 und 300 nm liegt (Meßmethode: Laserlichtstreuung, Meßgerät: Malvern Autosizer 2C).

Mit den oben beschriebenen Polyacrylatharzen als Bindemittel können erfindungsgemäße wäßrige Basislacke hergestellt werden. Es ist jedoch bevorzugt, die Polyacrylatharze mit mindestens einem wasserverdünnbaren Polyesterharz und/oder mindestens einem wasserverdünnbaren Aminoplastharz als Bindemittel zu kombinieren. Bei Basislacken, die nur nichtmetallische Pigmente bzw. Mischungen aus nichtmetallischen Pigmenten und keine Metallpigmente enthalten, wird vorzugsweise eine Mischung eingesetzt aus
(A) 10 bis 95, vorzugsweise 25 bis 70 Gew.-% des erfindungsgemäßen Polyacrylatharzes,
(B) 5 bis 50, vorzugsweise 10 bis 40 Gew.-% eines Aminoplastharzes,
(C) 0 bis 85, vorzugsweise 20 bis 60 Gew.-% eines wasserverdünnbaren Polyesterharzes.

Die Summe der Gewichtsanteile der Komponenten (A) bis (C) beträgt stets 100 Gew.-%.

Als wasserverdünnbare Polyesterharze werden vorzugsweise solche eingesetzt, die in der DE-OS 4009858 beschrieben sind.

Neben den oben beschriebenen Bindemitteln können die erfindungsgemäßen Basislacke noch weitere wasserverdünnbare Kunstharze, die zum Anreiben der Pigmente und/oder als rheologiesteuernde Additive dienen, enthalten. Als Beispiele für solche Kunstharze werden genannt: Polyether, wie z.B. Polypropylenglykol mit einem zahlenmittleren Molekulargewicht von 400 bis 1200, wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Urethane oder carboxylgruppenhaltige Polyacrylate.

Die erfindungsgemäßen Basislacke können auch vernetzte Polymikroteilchen, wie sie z.B. in der EP-A-38 127 offenbart sind, enthalten.

Die erfindungsgemäßen Basislacke können auch anorganische Rheologiesteuerungsmittel, wie z.B. Schichtsilikate enthalten.

Als Pigmente können die erfindungsgemäßen Basislacke farbgebende Pigmente auf anorganischer Basis, wie z.B. Titandioxid, Eisenoxid, Ruß usw. und/oder farbgebende Pigmente auf organischer Basis und/oder übliche Metallpigmente (z.B. handelsübliche Aluminiumbronzen, Edelstahlbronzen ...) und/oder nicht-metallische Effektpigmente (z.B. Perlglanz- bzw. Interferenzpigmente) enthalten. Die erfindungsgemäßen Basislacke enthalten vorzugsweise Metallpigmente und/oder Effektpigmente. Die Pigmentierungshöhe liegt in üblichen Bereichen.

Die erfindungsgemäßen Basislacke weisen bei Spritzviskosität im allgemeinen einen Festkörpergehalt von etwa 15 bis 50 Gew.-% auf. Der Festkörpergehalt variiert mit dem Verwendungszweck der Basislacke. Für Metalliclacke liegt er beispielsweise bevorzugt bei 17 bis 25 Gew.-%. Für unifarbige Lacke liegt er höher, beispielsweise bei 30 bis 45 Gew.-%.

Die erfindungsgemäßen Basislacke können zusätzlich übliche organische Lösemittel enthalten. Deren Anteil wird möglichst gering gehalten. Er liegt beispielsweise unter 15 Gew.-%.

Die erfindungsgemäßen Basislacke werden im allgemeinen auf einen pH-Wert zwischen 6,5 und 9,0 eingestellt. Der pH-Wert kann mit üblichen Aminen, wie z.B. Triethylamin, Dimethylaminoethanol und N-Methylmorpholin eingestellt werden.

Die erfindungsgemäßen Basislacke können sowohl bei der Serien- als auch bei der Reparaturlackierung eingesetzt werden. Sie werden vorzugsweise bei der Serienlackierung eingesetzt.

Als transparente Decklacke können Lacke auf Basis organischer Lösemittel, wasserverdünnbare Lacke und auch Pulverlacke eingesetzt werden. Die Lacke können als unpigmentierte Klarlacke oder als transparent pigmentierte Lacke eingesetzt werden.

Mit den erfindungsgemäßen Basislacken können auch ohne Überlackierung mit einem transparenten Decklack qualitativ hochwertige Lackierungen hergestellt werden. Auf diese Weise werden einschichtige Lackierungen erhalten, die sich durch einen besonders hohen Glanz auszeichnen.

Die Erfindungsgemäßen Lacke können auf beliebige Substrate, wie z.B. Metall, Holz, Kunststoff oder Papier aufgebracht werden.

In den folgenden Beispielen wird die Erfindung näher erläutert.

### A Herstellung einer wäßrigen Polyesterharzlösung

In einen Reaktor mit Rührer, Thermometer und Füllkörperkolonne werden 729 Gew.- Teile Neopentylglykol, 768 Gew.-Teile Hexandiol, 462 Gew.-Teile Hexahydrophthalsäureanhydrid und 1710 Gew.-Teile einer polymeren Fettsäure (Dimerengehalt mindestens 98 Gew.-%, Trimerengehalt höchstens 2 Gew.-%, Monomerengehalt höchstens Spuren) eingewogen und zum Schmelzen gebracht. Unter Rühren wird so aufgeheizt, daß die Kolonnenkopftemperatur 100°C nicht übersteigt. Es wird bei maximal 220°C so lange verestert bis eine Säurezahl von 9 erreicht ist. Nach dem Abkühlen auf 180°C werden 768 Gew.-Teile Trimellithsäureanhydrid zugegeben und weiter verestert bis eine Säurezahl von 32 erreicht ist. Dann wird auf 120°C abgekühlt und mit 1392 Gew.-Teilen Butylglykol angelöst. Nach dem Abkühlen auf 90°C werden langsam 158 Gew.-Teile Dimethylethanolamin und anschließend 1150 Gew.-Teile deionisiertes Wasser eingerührt. Diese Polyesterharzlösung wird mit Dimethylethanolamin auf einen pH-Wert von 7,6 und mit deionisiertem Wasser auf einen nichtflüchtigen Anteil von 60 Gew.-% eingestellt.

### B Herstellung einer wäßrigen Polyurethandispersion

716,6 Gew.-Teile eines Kondensationsproduktes (zahlenmittleres Molekulargewicht: 1410) aus 1,81 Mol einer polymeren Fettsäure (Dimerengehalt mindestens 98 Gew.-%, Trimerengehalt höchstens 2 Gew.-%, Monomerengehalt höchstens Spuren), 0,82 Mol Isophthalsäure, 0,61 Mol Hexandiol und 0,61 Mol Neopentylgylkol, 61 Gew.-Teile Dimethylolpropionsäure, 10,6 Gew.-Teile Neopentylglykol, 365 Gew.-Teile Methylethylketon und 308,3 Gew.-Teile m-TMXDI werden in ein rührbares Reaktionsgefäß unter einer Stickstoffatmosphäre auf 80°C erhitzt. Die Reaktion wird bis zu einem NCO-Gehalt von 1,1 Gew.-% , bezogen auf die Gesamtzusammensetzung, fortgeführt. Dann werden 52,6 Gew.-Teile Trimethylolpropan zugegeben und es wird bei 80°C gerührt bis keine freien Isocyanatgruppen mehr nachweisbar sind. Dann werden langsam 33 Gew.-Teile Dimethylethanolamin, 255 Gew.-Teile Butylglykol und anschließend 2153 Gew.-Teile deionisiertes Wasser eingerührt. Unter Vakuum wird das Methylethylketon abdestilliert. Man erhält eine feinteilige Dispersion, deren pH-Wert mit Dimethylethanolamin auf 7,4 und deren nichtflüchtiger Anteil mit deionisiertem Wasser auf 31 Gew.-% eingestellt werden.

### C Herstellung einer acrylierten Polyurethandispersion

525,5 Gew.-Teile eines Kondensationsproduktes (zahlenmittleres Molekulargewicht: 1423) aus 1 Mol einer polymeren Fettsäure (Dimerengehalt mindestens 98 Gew.-%, Trimerengehalt höchstens 2 Gew.-%, Monomerengehalt höchstens Spuren), 1 Mol Isophthalsäure und 2,6 Mol Hexandiol, 28,3 Gew.-Teile Neopentylglykol, 9,0 Gew.-Teile Trimethylolmonoallylether, 194 Gew.-Teile Isophorondiisocyanat, 523,7 Gew.-Teile Methylisobutylketon und 0,5 Gew.-Teile Dibutylzinndilaurat werden in ein rührbares Reaktionsgefäß unter einer Stickstoffatmosphäre auf 105°C erhitzt. Die Reaktion wird bis zu einem NCO-Gehalt von 1,1 Gew.-% , bezogen auf die Gesamtzusammensetzung, fortgeführt. Dann werden 45 Gew.-Teile Trimethylolpropan zugegeben und es wird bei 105°C gerührt bis keine freien Isocyanatgruppen mehr nachweisbar sind. Zu dieser Lösung werden bei 105°C innerhalb von 3h eine Monomerenmischung bestehend aus 370 Gew.-Teile n-Butylacrylat, 370 Gew.-Teile Methylmethacrylat und 62,4 Gew.-Teile Acrylsäure und innerhalb von 3,5h eine Initiatorlösung bestehend aus 163,5 Gew.-Teile Methylisobutylketon und 24 Gew.-Teile Peroxid t-Butylperethylhexanoat zudosiert. Der Monomerenzulauf und der Initiatorzulauf beginnen gleichzeitig. Ca. 3h nach Beendigung des Initiatorzulaufes (FK 70-72%; Viskosität = 3,0 - 6,0 dPas für Probe/N-Methylpyrrolidon = 1:1) wird auf 95°C abgekühlt und 50 Gew.-Teile Dimethylethanolamin eingerührt. Anschließend wird mit 2390 Gew.-Teile deionisiertem Wasser verdünnt und das Methylisobutylketon abdestilliert. Der pH-Wert wird mit Dimethylethanolamin auf 7,7 und der nichtflüchtige Anteil mit deionisiertem Wasser auf 40 Gew.-% eingestellt.

### D Herstellung des erfindungsgemäßen, polyurethanmodifizierten Polyacrylates

Herstellung der Polyurethanlösung:
500 Gew.-Teile eines Kondensationsproduktes (zahlenmittleres Molekulargewicht: 1345) aus 1 Mol einer polymeren Fettsäure (Dimerengehalt mindestens 98 Gew.-%, Trimerengehalt höchstens 2 Gew.-%, Monomerengehalt höchstens Spuren), 1,5 Mol Isophthalsäure, 1,6 Mol Neopentylglykol und 1,7 Mol Hexandiol, 31,2 Gew.-Teile Neopentylglykol, 185 Gew.-Teile Methylethylketon, 201,7 Gew.-Teile m-TMXDI und 0,7 Gew.-Teile Dibutylzinndilaurat werden in ein rührbares Reaktionsgefäß unter einer Stickstoffatmosphäre auf 80°C erhitzt. Die Reaktion wird bis zu einem NCO-Gehalt von 1,3 Gew.-% , bezogen auf die Gesamtzusammensetzung, fortgeführt. Dann werden 30 Gew.-Teile Diethanolamin zugegeben und bei 80°C gerührt bis keine freien Isocyanatgruppen mehr nachweisbar sind. Dann werden 466 Gew.-Teile Butylglykol eingerührt und das Methylethylketon im Vakuum abdestilliert. Die Polyurethanlösung wird anschließend mit Butylglykol auf einen nichtflüchtigen Anteil von 60 Gew.-% eingestellt.

In einem Stahlkessel, ausgestattet mit Monomerenzulauf, Initiatorzulauf, Thermometer, Ölheizung und Rückflußkühler werden 28,44 Gew.-Teile Butylglykol und 24,24 Gew.-Teile von o.g. Polyurethanlösung vorgelegt und auf 110 °C aufgeheizt. Dann wird eine Lösung von 5,1 Gew.-Teilen t-Butylperethylhexanoat in 6,0 Gew.- Teilen Butylglykol in einer solchen Geschwindigkeit zugegeben , daß die Zugabe nach 5 h 30 min abgeschlossen ist.
Mit Beginn der Zugabe der t-Butylperethylhexanoatlösung wird auch mit der Zugabe einer Mischung aus (a1): 18,36 Gew.-Teilen n-Butylmethacrylat, 17,0 Gew.-Teilen Methylmethacrylat und 17,0 Gew.-Teilen Laurylmethacrylat; (a2) 17,34 Gew.- Teilen Hydroxipropylarcylat und (a3) 12,75 Gew.-Teilen Styrol begonnen. Die Mischung aus (a1), (a2) und (a3) wird in einer solchen Geschwindigkeit zugegeben, daß die Zugabe in 5 h abgeschlossen ist.
Nachdem die t-Butylperethyhlhexanoatlösung vollständig zugegeben worden ist, wird die Polymerisationstemperatur noch 1 h auf 110 °C gehalten.
Dann wird eine Lösung von 1,17 Gew.-Teilen t-Butylperethylhexanoat in 3,5 Gew.-Teilen Butylglykol in einer solchen Geschwindigkeit zugegeben , daß die Zugabe nach 1 h 30 min abgeschlossen ist. Mit Beginn der Zugabe der t- Butylperethylhexanoatlösung wird auch mit der Zugabe einer Mischung aus (b1) 5,85 Gew.- Teilen Acrylsäure und (b2): 4,65 Gew.-Teilen n-Butylmethacrylat, 2,94 Gew.-Teilen Methylmethacrylat, 5,90 Gew.-Teilen Laurylmethacrylat; 1,25 Gew.-Teilen Hydroxipropylacrylat und 2,94 Gew.-Teilen Styrol begonnen. Die Mischung aus (b1) und (b2) wird in einer solchen Geschwindigkeit zugegeben, daß die Zugabe in 1 h abgeschlossen ist. Die Temperatur wird noch 1h 30 min auf 110 °C gehalten. Die so erhaltene Harzlösung wird destillativ unter Vakuum auf 80 Gew-% (Feststoffgehalt) aufkonzentriert und mit Dimethylethanolamin bei 80 °C innerhalb von ca. 30 min. bis zu einem Neutralisationsgrad von 80 % neutralisiert. Die Harzlösung wird auf 60 °C abgekühlt und die Heizung abgestellt. Anschließend wird langsam soviel Wasser zugegeben bis der Feststoffgehalt der Dispersion etwa 40 Gew.-% beträgt.
Die erhaltene Dispersion hat folgende Kennzahlen: Säurezahl 36,7 mg KOH/g, und einen pH- Wert von 7,6.

### E Herstellung einer wäßrigen Polyacrylatdispersion

In einem Stahlkessel, ausgestattet mit Monomerenzulauf, Initiatorzulauf, Thermometer, Ölheizung und Rückflußkühler werden 32 Gew.-Teile Butylglykol vorgelegt und auf 110 °C aufgeheizt. Dann wird eine Lösung von 6,0 Gew.-Teilen t-Butylperethylhexanoat in 6,0 Gew.- Teilen Butylglykol in einer solchen Geschwindigkeit zugegeben , daß die Zugabe nach 5 h 30 min abgeschlossen ist. Mit Beginn der Zugabe der t-Butylperethylhexanoatlösung wird auch mit der Zugabe einer Mischung aus (al): 21,6 Gew.-Teilen n-Butylmethacrylat, 20,0 Gew.-Teilen Methylmethacrylat und 20,0 Gew.-Teilen Laurylmethacrylat; (a2) 20,4 Gew.- Teilen Hydroxipropylarcylat und (a3) 15,0 Gew.-Teilen Styrol begonnen. Die Mischung aus (a1), (a2) und (a3) wird in einer solchen Geschwindigkeit zugegeben, daß die Zugabe in 5 h abgeschlossen ist.
Nachdem die t-Butylperethyhlhexanoatlösung vollständig zugegeben worden ist, wird die Polymerisationstemperatur noch 1 h auf 110 °C gehalten.
Dann wird eine Lösung von 1,17 Gew.-Teilen t-Butylperethylhexanoat in 3,5 Gew.-Teilen Butylglykol in einer solchen Geschwindigkeit zugegeben , daß die Zugabe nach 1 h 30 min abgeschlossen ist. Mit Beginn der Zugabe der t- Butylperethylhexanoatlösung wird auch mit der Zugabe einer Mischung aus (b1) 5,85 Gew.- Teilen Acrylsäure und (b2): 4,65 Gew.-Teilen n-Butylmethacrylat, 2,94 Gew.-Teilen Methylmethacrylat, 5,90 Gew.-Teilen Laurylmethacrylat; 1,25 Gew.-Teilen Hydroxipropylacrylat und 2,94 Gew.-Teilen Styrol begonnen. Die Mischung aus (b1) und (b2) wird in einer solchen Geschwindigkeit zugegeben, daß die Zugabe in 1 h abgeschlossen ist. Die Temperatur wird noch 1h 30 min auf 110 °C gehalten. Die so erhaltene Harzlösung wird destillativ unter Vakuum auf 80 Gew-% (Feststoffgehalt) aufkonzentriert und mit Dimethylethanolamin bei 80 °C innerhalb von ca. 30 min. bis zu einem Neutralisationsgrad von 80 % neutralisiert. Die Harzlösung wird auf 60 °C abgekühlt und die Heizung abgestellt. Anschließend wird langsam soviel Wasser zugegeben bis der Feststoffgehalt der Dispersion etwa 40 Gew.-% beträgt.
Die erhaltene Dispersion hat folgende Kennzahlen: Säurezahl 36,8 mg KOH/g und einen pH- Wert von 7,6.

### I Herstellung eines wäßrigen Metallic-Basislackes (Vergleichsbeispiel nach DE 40 09 858 A1)

Es werden 33,5 Gew.-Teile Verdickungsmittel (Paste eines Natrium-Magnesium-Silikates mit Schichtstruktur [Laponite RD], 3%ig in Wasser) vorgelegt.
Dazu wird eine Lösung aus 4,3 Gew.-Teilen Butylglykol und 7,7 Gew.-Teilen einer 70%igen Lösung eines handelsüblichen Melaminharzes in Isobutanol (Maprenal MF927) unter Rühren zugegeben. Anschließend werden dieser Mischung 33,3 Gew.-Teile der Polyurethandispersion gemäß B, 0,4 Gew.-Teile Dimethylethanolamin (10%ig in Wasser) und 4,8 Gew.-Teile der Polyacrylatharzdispersion gemäß E nacheinander unter Rühren zugegeben. Getrennt davon wird eine Aluminiumpigmentaufschlämmung wie folgt hergestellt: 4,4 Gew.-Teile einer handelsüblichen chromatierten Aluminiumpaste (65%ig in Benzin/Solventnaphta/Butylglykol, durchschnittlicher Teilchendurchmesser 15 µm) werden unter Zugabe von 4 Gew.-Teilen Butylglykol homogenisiert. Zu dieser Aufschlämmung werden anschließend 3,2 Gew.-Teile des wasserlöslichen Polyesterharzes gemäß A und 1,0 Gew.-Teile Polypropylenglykol (zahlenmittelers Molekulargewicht: 900) gegeben. Diese Aluminiumpigmentaufschlämmung wird in die oben beschriebene Mischung eingerührt. Danach werden noch 3,8 Gew.-Teile deionisiertes Wasser zugegeben und mit Dimethylethanolamin (10%ig in Wasser) ein pH-Wert von 7,7 - 8,0 eingestellt.

### II Herstellung eines wäßrigen Metallic-Basislackes (Vergleichsbeispiel nach DE 40 10 176)

Es werden 33,5 Gew.-Teile Verdickungsmittel (Paste eines Natrium-Magnesium-Silikates mit Schichtstruktur [Laponite RD], 3%ig in Wasser) vorgelegt.
Dazu wird eine Lösung aus 4,3 Gew.-Teilen Butylglykol und 7,7 Gew.-Teilen einer 70%igen Lösung eines handelsüblichen Melaminharzes in Isobutanol (Maprenal MF927) unter Rühren zugegeben. Anschließend werden dieser Mischung 33,3 Gew.-Teile der Polyurethandispersion gemäß B, 0,4 Gew.-Teile Dimethylethanolamin (10%ig in Wasser) und 4,8 Gew.-Teile der acrylierten Polurethandispersion gemäß C nacheinander unter Rühren zugegeben. Getrennt davon wird eine Aluminiumpigmentaufschlämmung wie folgt hergestellt: 4,4 Gew.-Teile einer handelsüblichen chromatierten Aluminiumpaste (65%ig in Benzin/Solventnaphta/Butylglykol, durchschnittlicher Teilchendurchmesser 15 µm) werden unter Zugabe von 4 Gew.-Teilen Butylglykol homogenisiert. Zu dieser Aufschlämmung werden anschließend 3,2 Gew.-Teile des wasserlöslichen Polyesterharzes gemäß A und 1,0 Gew.-Teile Polypropylenglykol (zahlenmittelers Molekulargewicht: 900) gegeben. Diese Aluminiumpigmentaufschlämmung wird in die oben beschriebene Mischung eingerührt. Danach werden noch 3,8 Gew.-Teile deionisiertes Wasser zugegeben und mit Dimethylethanolamin (10%ig in Wasser) ein pH-Wert von 7,7 - 8,0 eingestellt.

### III Herstellung eines erfindungsgemäßen wäßrigen Metallic-Basislackes

Es werden 33,5 Gew.-Teile Verdickungsmittel (Paste eines Natrium-Magnesium-Silikates mit Schichtstruktur [Laponite RD], 3%ig in Wasser) vorgelegt.
Dazu wird eine Lösung aus 4,3 Gew.-Teilen Butylglykol und 7,7 Gew.-Teilen einer 70%igen Lösung eines handelsüblichen Melaminharzes in Isobutanol (Maprenal MF927) unter Rühren zugegeben. Anschließend werden dieser Mischung 33,3 Gew.-Teile der Polyurethandispersion gemäß B, 0,4 Gew.-Teile Dimethylethanolamin (10%ig in Wasser) und 4,8 Gew.-Teile der polyurethanmodifizierten Polyacrylatharzdispersion gemäß D nacheinander unter Rühren zugegeben. Getrennt davon wird eine Aluminiumpigmentaufschlämmung wie folgt hergestellt: 4,4 Gew.-Teile einer handelsüblichen chromatierten Aluminiumpaste (65%ig in Benzin/Solventnaphta/Butylglykol, durchschnittlicher Teilchendurchmesser 15 µm) werden unter Zugabe von 4 Gew.-Teilen Butylglykol homogenisiert. Zu dieser Aufschlämmung werden anschließend 3,2 Gew.-Teile des wasserlöslichen Polyesterharzes gemäß A und 1,0 Gew.-Teile Polypropylenglykol (zahlenmittelers Molekulargewicht: 900) gegeben. Diese Aluminiumpigmentaufschlämmung wird in die oben beschriebene Mischung eingerührt. Danach werden noch 3,8 Gew.-Teile deionisiertes Wasser zugegeben und mit Dimethylethanolamin (10%ig in Wasser) ein pH-Wert von 7,7 - 8,0 eingestellt.

Die so hergestellten Basislacke wurden mittels folgender Messungen verglichen;

### Anwendungen:

Beschreibung von Farbunterschieden durch Farbortbestimmung von Vorlage und Probe und Berechnung der Farbabstände mit ihren Anteilen, simultan für i.d.R. verschiedene Beleuchtungs/Beobachtungs-Geometrieen zur Beurteilung von Farbunterschieden und Flop-Verhalten bei Metall- und anderen Effektlacken.

### Verfahren:

Analog zum Verfahren bei Unilacken werden hier die Farbmaßzahlen und Farbdifferenzen für i.d.R. drei verschiedene Winkelkombinationen ermittelt. Die graphischen Darstellungen unterstützten die Beurteilung des Verhaltens von Vorlage und Probe bei Änderung der Beleuchtungs/Beobachtungswinkel.

| Meßgeräte | Bel./Beob. | Geom. | Meßbereich | Schrittw. | Bandbr. |
|---|---|---|---|---|---|
| MMK 111 | 45°-20° | 25° | 400-700nm | 10 nm | 5nm |
| | /0° | 45° | | | |
| | /+ 25° | 70° | | | |
| DMC 26 m. | var./var. | var. | 380-720nm | 10nm | 10nm |

### Auswertung:

Die Kennzahl MF-D wurde wie folgt ermittelt:
MF-D = 50 * (L25 - L70) : L70
Bem.: Probengröße MMK 111 mind. 3 * 5 cm DMC 26 3 * 5 cm bis 8 * 20 cm
Ref.: DIN 5033, DIN 6174

| **Versuch** | **I** | **II** | **III** |
|---|---|---|---|
| MF-D ( frisch ) | 73 | 71 | 74 |
| MF-D | 63 | 58 | 72 |
| | | | |
| (4 Wo 40° C') | | | |

Es zeigt sich, daß insbesondere bei erhöhter Temperatur die Lagerstabillität signifikant verbessert ist.

## Patentansprüche

1. Polyurethanmodifiziertes Polyacrylat, erhältlich
I. durch Polymerisation unter Zugabe
a1) eines im wesentlichen carboxylgruppenfreien Acrylsäureesters oder eines Gemisches von Acrylsäureestern,
a2) eines ethylenisch ungesättigten Monomeren, das mindestens eine Hydroxylgruppe pro Molekül trägt und im wesentlichen carboxylgruppenfrei ist oder eines Gemisches aus solchen Monomeren und
a3) eines im wesentlichen carboxylgruppenfreien von (a1) und (a2) verschiedenen ethylenisch ungesättigten Monomeren oder eines Gemisches aus solchen Monomeren
zu einer Polyurethanlösung, die keine copolymerisierbaren Doppelbindungen enthält und aus folgenden Komponenten herstellbar ist:
a) einem Polyester- und/oder Polyetherpolyol mit einem zahlenmittleren Molekulargewicht von 400 bis 5000 oder ein Gemisch aus solchen Polyester- und/oder Polyetherpolyolen und
b) einem Polyisocyanat oder ein Gemisch aus Polyisocyanaten,
wobei die Komponente (b) hinsichtlich der Funktionalität der Polyisocyanate so zusammengesetzt ist, daß kein vernetztes Polyurethanharz erhalten wird, und wobei das Polyurethanharz ein zahlenmittleres Molekulargewicht von 700 bis 30.000 aufweist,
II. durch anschließende Weiterpolymerisation und Zugabe
b1) mindestens eines eine Carboxylgruppe pro Molekül tragenden ethylenisch ungesättigten Monomeren oder eines Gemisches aus solchen Monomeren und
b2) eines im wesentlichen carboxylgruppenfreien ethylenisch ungesättigten Monomeren oder eines Gemisches aus solchen Monomeren,
nachdem mindestens 80 Gew.-% der in Stufe (I) zugegebenen Monomere umgesetzt worden sind, und
III. durch Neutralisation nach Beendigung der Polymerisation und Dispergierung in Wasser,
wobei die Komponenten (a1), (a2), (a3), (b1) und (b2) in Art und Menge so ausgewählt werden, daß das aus (a1), (a2), (a3), (b1) und (b2) erhaltene Polyacrylatharz eine Hydroxylzahl von 0 - 200, eine Säurezahl von 20 - 100 und eine Glasübergangstemperatur von - 40 bis + 60°C aufweist.

2. Polyurethanmodifiziertes Polyacrylat nach Anspruch 1, **dadurch gekennzeichnet**, daß der Anteil der Komponente (a1) 40 - 90 Gew.-%, (a2) 0 - 45 Gew.-%, (a3) 0 - 40 Gew.-%, (b1) 2,5 - 15 Gew.-% und (b2) 0 - 60 Gew.-% beträgt.

3. Polyurethanmodifiziertes Polyacrylat nach Anspruch 2, **dadurch gekennzeichnet**, daß die Anteile der Komponenten (a1) 40 - 80 Gew.-%, (a2) 4 - 34 Gew.-%, (a3) 10 - 30 Gew.-%, (b1) 3 - 7 Gew.-% und (b2) 0 - 28 Gew.-% betragen.

4. Polyurethanmodifiziertes Polyacrylat nach einem der Ansprüche 1 - 3, **dadurch gekennzeichnet**, daß diese Summe der Gewichtsanteile von (a1), (a2), (a3), (b1) und (b2) stets 100 % Gew.-% ergibt.

5. Polyurethanmodifiziertes Polyacrylat nach einem der Ansprüche 1 - 4, **dadurch gekennzeichnet**, daß das Polyurethanharz erhältlich ist unter zusätzlichem Einsatz zumindest einer der folgenden Komponenten:
c) einer Verbindung, die mindestens eine gegenüber Isocyanatgruppen reaktive und mindestens eine zur Anionenbildung befähigte Gruppe im Molekül aufweist oder ein Gemisch aus solchen Verbindungen,
d) einer Verbindung, die mindestens eine gegenüber NCO-Gruppen reaktive Gruppe und mindestens eine Poly(oxyalkylen)gruppe im Molekül aufweist, oder ein Gemisch aus solchen Verbindungen und
e) einer Hydroxyl- und/oder Aminogruppen enthaltende organische Verbindung mit einem Molekulargewicht von 60 bis 600, oder ein Gemisch aus solchen Verbindungen,

6. Polyurethanmodifiziertes Polyacrylat nach einem der Ansprüche 1 - 5, **dadurch gekennzeichnet**, daß die Hydroxylzahl zwischen 60 und 140, die Säurezahl zwischen 25 und 50 und die Glasübergangstemperatur zwischen - 20 und + 40°C liegt.

7. Verfahren zur Herstellung eines polyurethanmodifizierten Polyacrylats **dadurch gekennzeichnet,** daß
A. eine Polyurethanlösung, die keine copolymerisierbaren Doppelbindungen enthält, aus den folgenden Komponenten hergestellt wird:
a) einem Polyester- und/oder Polyetherpolyol mit einem zahlenmittleren Molekulargewicht von 400 bis 5000 oder ein Gemisch aus solchen Polyester- und/oder Polyetherpolyolen und
b) einem Polyisocyanat oder ein Gemisch aus Polyisocyanaten,
wobei die Komponente (b) hinsichtlich der Funktionalität der Polyisocyanate so zusammengesetzt ist, daß kein vernetztes Polyurethanharz erhalten wird, und wobei das Polyurethanharz ein zahlenmittleres Molekulargewicht von 700 bis 30.000 aufweist,
B. dieser Lösung
a1) ein im wesentlichen carboxylgruppenfreier Acrylsäureesster oder ein Gemisch von Acrlysäureestern,
a2) ein äthylenisch ungesättigtes Monomer, das mindestens eine Hydroxylgruppe pro Molekül trägt, und im wesentlichen carboxylgruppenfrei ist oder ein Gemisch aus solchen Monomeren und
a3) ein im wesentlichen carboxylgruppenfreies von a1) und a2) verschiedenes ethylenisch ungesättigtes Monomer oder ein Gemisch aus solchen Monomeren zugesetzt wird, und
C. nachdem mindestens 80 Gew.-% der in Stufe B. zugegebenen Monomere umgesetzt worden sind, durch Zugabe
b1) mindestens eines eine Carboxylgruppe pro Molekül tragenden ethylenisch ungesättigten Monomeren oder eines Gemisches aus solchen Monomeren und
b2) eines im wesentlichen carboxylgruppenfreien ethylenischen ungesättigten Monomeren oder eines Gemisches aus solchen Monomeren weiterpolymerisiert wird, und
D. nach Beendigung der Polymerisation das erhaltene Polyacrylatharz zumindest teilweise neutralisiert und im Wasser dispergiert wird,
wobei die Komponenten (a1), (a2), (a3), (b1) und (b2) in Art und Menge so ausgewählt werden, daß das aus (a1), (a2), (a3), (b1) und (b2) erhaltene Polyacrylatharz eine Hydroxylzahl von 0- 200, eine Säurezahl von 20 - 100 und eine Glasübergangstemperatur von- 40 bis + 60°C aufweist.

8. Verfahren nach Anspruch 7, **dadurch gekennzeichnet,** daß das Polyurethanharz, das keine copolymerisierbaren Doppelbindungen enthält, vor der Polymerisation zu einem organischen Lösemittel oder Lösemittelgemisch gegeben wird.

9. Verfahren nach einem der Ansprüche 8 oder 9, **dadurch gekennzeichnet**, daß die Anteile der zugesetzten Komponenten (a1) 40 - 90 Gew.-%, (a2) 0 - 45 Gew.-%, (a3) 0- 40 Gew.-%, (b1) 2,5 - 15 Gew.-% und (b2) 0- 60 Gew.-% betragen.

10. Verfahren nach Anspruch 9, **dadurch gekennzeichnet**, daß der Anteil der Komponenten (a1) 40 - 80 Gew.-%, (a2) 4- 34 Gew.-%, (a3) 10 - 30 Gew.-%, (b1) 3 - 7 Gew.-% und (b2) 0- 28 Gew.-% beträgt.

11. Verfahren nach einem der Ansprüche 7 - 10, **dadurch gekennzeichnet**, daß die Summe der Gewichtsanteile von (a1), (a2), (a3), (b1) und (b2) stets 100 Gew.-% ergibt.

12. Verfahren nach einem der Ansprüche 7 - 11, **dadurch gekennzeichnet**, daß die Hydroxylzahl 60 - 140, die Säurezahl 25 - 50, die Glasübergangstemperatur - 20 bis + 40°C beträgt.

13. Verwendung des polyurethanmodifizierten Polyacrylats nach einem der Ansprüche 1 - 6 zur Herstellung von wässrigen, pigmentierten Lacken.

## Claims

1. Polyurethane-modified polyacrylate obtainable
I. by polymerization with the addition
a1) of an essentially carboxyl-free acrylate or of a mixture of acrylates,
a2) of an ethylenically unsaturated monomer which carries at least one hydroxyl group per molecule and is essentially carboxyl-free or of a mixture of such monomers, and
a3) of an essentially carboxyl-free, ethylenically unsaturated monomer which is different from (a1) and (a2), or of a mixture of such monomers,
to give a polyurethane solution which contains no copolymerizable double bonds and can be prepared from the following components:
a) a polyester- and/or polyetherpolyol having a number-average molecular weight of from 400 to 5000 or a mixture of such polyester- and/or polyetherpolyols, and
b) a polyisocyanate or a mixture of polyisocyanates, component b) in terms of the functionality of the polyisocyanates being composed such that no crosslinked polyurethane resin is obtained, and the polyurethane resin having a number-average molecular weight of from 700 to 30,000,
II. by subsequent further polymerization and addition
b1) of at least one ethylenically unsaturated monomer which carries one carboxyl group per molecule, or of a mixture of such monomers, and
b2) of an essentially carboxyl-free, ethylenically unsaturated monomer, or of a mixture of such monomers,
after at least 80% by weight of the monomers added in step (I) have been reacted, and
III. by neutralization after the end of the polymerization, and dispersion in water,
the nature and amount of components (a1), (a2), (a3), (b1) and (b2) being selected such that the polyacrylate resin obtained from (a1), (a2), (a3), (b1) and (b2) has a hydroxyl number of 0 - 200, an acid number of 20 - 100 and a glass transition temperature of from -40 to +60°C.

2. Polyurethane-modified polyacrylate according to Claim 1, characterized in that the proportion of component (a1) is 40-90% by weight, (a2) 0-45% by weight, (a3) 0-40% by weight, (b1) 2.5-15% by weight and (b2) 0-60% by weight.

3. Polyurethane-modified polyacrylate according to Claim 2, characterized in that the proportions of components (a1) are 40-80% by weight, (a2) 4-34% by weight, (a3) 10-30% by weight, (b1) 3-7% by weight and (b2) 0-28% by weight.

4. Polyurethane-modified polyacrylate according to one of Claims 1-3, characterized in that this [sic] sum of the proportions by weight of (a1), (a2), (a3), (b1) and (b2) is always 100% by weight.

5. Polyurethane-modified polyacrylate according to one of Claims 1-4, characterized in that the polyurethane resin is obtainable by additionally adding one of the following components:
c) a compound which has at least one group which is reactive towards isocyanate groups, and at least one group capable of forming anions, in the molecule, or a mixture of such compounds,
d) a compound which has at least one group which is reactive towards NCO groups, and at least one poly(oxyalkylene) group, in the molecule, or a mixture of such compounds, and
e) a hydroxyl- and/or amino-containing organic compound having a molecular weight of from 60 to 600, or a mixture of such compounds.

6. Polyurethane-modified polyacrylate according to one of Claims 1-5, characterized in that the hydroxyl number is between 60 and 140, the acid number is between 25 and 50 and the glass transition temperature is between -20 and +40°C.

7. Process for preparing a polyurethane-modified polyacrylate, characterized in that
A. a polyurethane solution which contains no copolymerizable double bonds is prepared from the following components:
a) a polyester- and/or polyetherpolyol having a number-average molecular weight of from 400 to 5000 or a mixture of such polyester-
and/or polyetherpolyols, and b) a polyisocyanate or a mixture of polyisocyanates,
component b) in terms of the functionality of the polyisocyanates being composed such that no crosslinked polyurethane resin is obtained, and the polyurethane resin having a number-average molecular weight of from 700 to 30,000,
B. to this solution there is added
a1) an essentially carboxyl-free acrylate or a mixture of acrylates,
a2) an ethylenically unsaturated monomer which carries at least one hydroxyl group per molecule and is essentially carboxyl-free, or a mixture of such monomers, and
a3) an essentially carboxyl-free, ethylenically unsaturated monomer which is different from al) and a2), or a mixture of such monomers, and
C. after at least 80% by weight of the monomers added in stage B. have been reacted, further polymerization is carried out by adding
b1) at least one ethylenically unsaturated monomer which carries one carboxyl group per molecule, or a mixture of such monomers, and
b2) an essentially carboxyl-free, ethylenically unsaturated monomer, or a mixture of such monomers, and
D. after the end of polymerization the polyacrylate resin obtained is neutralized at least partially and dispersed in water,
the nature and amount of components (a1), (a2), (a3), (b1) and (b2) being selected such that the polyacrylate resin obtained from (a1), (a2), (a3), (b1) and (b2) has a hydroxyl number of 0 - 200, an acid number of 20 - 100 and a glass transition temperature of from -40 to +60°C.

8. Process according to Claim 7, characterized in that the polyurethane which contains no copolymerizable double bonds is added before the polymerization to an organic solvent or solvent mixture.

9. Process according to one of Claims 8 or 9 [sic], characterized in that the proportions of the added components (a1) are 40-90% by weight, (a2) 0-45% by weight, (a3) 0-40% by weight, (b1) 2.5-15% by weight and (b2) 0-60% by weight.

10. Process according to Claim 9, characterized in that the proportion of the components (a1) is 40-80% by weight, (a2) 4-34% by weight, (a3) 10-30% by weight, (b1) 3-7% by weight and (b2) 0-28% by weight.

11. Process according to one of Claims 7 - 10, characterized in that the sum of the proportions by weight of (a1), (a2), (a3), (b1) and (b2) is always 100% by weight.

12. Process according to one of Claims 7-11, characterized in that the hydroxyl number is 60-140, the acid number is 25-50 and the glass transition temperature is from -20 to +40°C.

13. Use of the polyurethane-modified polyacrylate according to one of Claims 1-6 for producing aqueous pigmented coating materials.

## Revendications

1. Polyacrylate modifié en polyuréthanne, pouvant être obtenu
I. par polymérisation avec addition de
a1) un ester acrylique essentiellement exempt de groupe carboxyle ou un mélange d'esters acryliques,
a2) un monomère éthyléniquement insaturé qui porte au moins un groupe hydroxyle par molécule et est essentiellement exempt de groupe carboxyle ou un mélange de tels monomères
a3) un monomère éthyléniquement insaturé, essentiellement exempt de groupe carboxyle différent de (a1) et (a2), ou un mélange de tels monomères
pour donner une solution de polyuréthanne qui ne contient pas de double liaison copolymérisable et peut être préparée à partir des composants suivants:
a) un polyester- et/ou polyéther-polyol ayant un poids moléculaire moyen en nombre de 400 à 5 000 ou un mélange de tels polyester- et/ou polyéther-polyols et
b) un polyisocyanate ou un mélange de polyisocyanates,
la composition du composant (B), en ce qui concerne la fonctionnalité des polyisocyanates, étant telle que l'on obtienne pas de résine polyuréthanne réticulée, et la résine de polyuréthanne présentant un poids moléculaire moyen en nombre de 700 à 30 000,
II. par polymérisation supplémentaire ultérieure et addition de
b1) au moins un monomère éthyléniquement insaturé portant un groupe carboxyle par molécule ou un mélange de tels monomères et
b2) un monomère éthyléniquement insaturé essentiellement exempt de groupe carboxyle ou un mélange de tels monomères,
après qu'au moins 80% en poids des monomères ajoutés à l'étape (I) ont réagi, et
III. par neutralisation et achèvement de la polymérisation et dispersion dans l'eau,
les composants (a1), (a2), (a3), (b1) et (b2) étant choisis en ce qui concerne la nature et la quantité, de telle sorte que la résine de polyacrylate obtenue à partir de (a1), (a2), (a3), (b1) et (b2) présente un indice d'hydroxyle de 0-200, un indice d'acide de 20-100 et une température de transition vitreuse de -40 à +60°C.

2. Polyacrylate modifié en polyuréthanne selon la revendication 1, caractérisé en ce que la proportion du composant (a1) est de 40-90% en poids, la proportion du composant (a2) est de 0-45% en poids, la proportion du composant (a3) est de 0-40% en poids, la proportion du composant (b1) est de 2,5-15% en poids et la proportion du composant (b2) est de 0-60% en poids.

3. Polyacrylate modifié en polyuréthanne selon la revendication 2, caractérisé en ce que la proportion du composant (a1) est de 40-80% en poids, la proportion du composant (a2) est de 4-34% en poids, la proportion du composant (a3) est de 10-30% en poids, la proportion du composant (b1) est de 3-7% en poids et la proportion du composant (b2) est de 0-28% en poids.

4. Polyacrylate modifié en polyuréthanne selon l'une quelconque des revendications 1-3, caractérisé en ce que la somme des proportions pondérales de (a1), (a2), (a3), (b1) et (b2) est de 100% en poids.

5. Polyacrylate modifié en polyuréthanne selon l'une quelconque des revendications 1-4, caractérisé en ce que la résine de polyuréthanne peut être obtenue par l'utilisation supplémentaire d'au moins des composants suivants:
c) un composé renfermant au moins un groupe réactif vis-à-vis des groupes isocyanate et au moins un groupe capable de former des anions ou un mélange de tels composés
d) un composé renfermant au moins groupe réactif vis-à-vis des groupes NCO et au moins un groupe polyoxyalkylène dans la molécule, ou un mélange de tels composés et
e) un composé hydroxyle renfermant des groupes hydroxyle et/ou amino, ayant un poids moléculaire de 60 à 600, ou un mélange de tels composés.

6. Polyacrylate modifié en polyuréthanne selon l'une quelconque des revendications 1-5, caractérisé en ce que l'indice d'hydroxyle est compris entre 60 et 140, l'indice d'acide est compris entre 25 et 50 et la température de transition vitreuse est comprise entre -20 et +40°C.

7. Procédé de préparation d'un polyacrylate modifié en polyuréthanne, caractérisé en ce que
A. on prépare une solution de polyuréthanne, qui ne contient pas de double liaison copolymérisable, à partir des composants suivants:
a) un polyester- et/ou polyéther-polyol ayant un poids moléculaire moyen en nombre de 400 à 5 000 ou un mélange de tels polyester- et/ou polyéther-polyols et
b) un polyisocyanate ou un mélange de polyisocyanates,
la composition du composant (b), en ce qui concerne la fonctionnalité des polyisocyanates, étant telle que l'on n'obtienne pas de résine de polyuréthanne réticulée, et la résine de polyuréthanne présentant un poids moléculaire moyen en nombre de 700 à 30 000,
B. on ajoute à cette solution
a1) un ester acrylique essentiellement exempt de groupe carboxyle ou un mélange d'esters acryliques,
a2) un monomère éthyléniquement insaturé qui porte au moins un groupe hydroxyle par molécule et est essentiellement exempt de groupe carboxyle ou un mélange de tels monomères
a3) un monomère éthyléniquement insaturé, essentiellement exempt de groupe carboxyle différent de (a1) et (a2), ou un mélange de tels monomères, et
C. après qu'au moins 80% en poids des monomères ajoutés à l'étape B. ont réagit, on procède à une polymérisation supplémentaire par addition de
b1) au moins un monomère éthyléniquement insaturé portant un groupe carboxyle par molécule ou un mélange de tels monomères et
b2) un monomère éthyléniquement insaturé essentiellement exempt de groupe carboxyle ou un mélange de tels monomères, et
D. après achèvement de la polymérisation, on neutralise au moins partiellement la résine de polyacrylate obtenue et on la disperse dans l'eau,
les composants (a1), (a2), (a3), (b1) et (b2) étant choisis en ce qui concerne la nature et la quantité, de telle sorte que la résine de polyacrylate obtenue à partir de (a1), (a2), (a3), (b1) et (b2) présente un indice d'hydroxyle de 0-200, un indice d'acide de 20-100 et une température de transition vitreuse de -40 à +60°C.

8. Procédé selon la revendication 7, caractérisé en ce que la résine de polyuréthanne, qui ne contient pas de double liaison copolymérisable est ajoutée avant la polymérisation à un solvant ou un mélange de solvants organiques.

9. Procédé selon l'une quelconque des revendications 8 ou 9, caractérisé en ce que les proportions des composants ajoutés sont de 40-90% en poids pour (a1), 0-45% en poids pour (a2), 0-40% en poids pour (a3), 2,5-15% en poids pour (b1) et 0-60% en poids pour (b2).

10. Procédé selon la revendication 9, caractérisé en ce que la proportion des composants est de 40-80% en poids pour (a1), 4-34% en poids pour (a2), 10-30% en poids pour (a3), 3-7% en poids pour (b1) et 0-28% en poids pour (b2).

11. Procédé selon l'une quelconque des revendications 7-10, caractérisé en ce que la somme des proportions pondérales de (a1), (a2), (a3), (b1) et (b2) est toujours de 100% en poids.

12. Procédé selon l'une quelconque des revendications 7-11, caractérisé en ce que l'indice d'hydroxyle est de 60-140, l'indice d'acide est de 25-50 et la température de transition vitreuse de -20 à +40°C.

13. Utilisation du polyacrylate modifié en polyuréthanne selon l'une quelconque des revendications 1-6 pour la préparation de vernis pigmentés aqueux.
